# EUROPÄISCHE PATENTANMELDUNG

(11) **EP 0 727 275 A1**
(43) Veröffentlichungstag der Anmeldung: **21.08.1996**
(21) Anmeldenummer: 96100883.6
(22) Anmeldetag: 23.01.1996
(51) Int. Cl.: B23K 31/02, B23K 9/028, F28F 9/18

(54) **Verfahren zum restspaltfreien Verschweissen der Enden dünnwandiger Wärmetauscherrohre**

(30) Priorität: 18.02.1995 DE 19505532
(71) Anmelder: BDAG Balcke-Dürr Aktiengesellschaft, D-40882 Ratingen (DE)
(72) Erfinder: Hirth, Markus, D-40227 Düsseldorf (DE)
(74) Vertreter: Stenger, Watzke & Ring Patentanwälte

(57) **Zusammenfassung**

Bei einem Verfahren zum restspaltfreien Verschweißen der Enden dünnwandiger Wärmetauscherrohre mit der die am Wärmeaustausch beteiligten Medien trennenden Wand wird die Wand (12) mit dem Innendurchmesser der Rohre (2) entsprechenden Bohrungen (13) und diese Bohrungen (13) umgebenden Ansatzflächen (17) für an den Rohrenden ausgebildete Stirnflächen (18) versehen. Anschließend werden mittels eines im Inneren der Bohrung (13) umlaufenden Schweißkopfes die Stirnflächen (18) der Rohre (2) mit den Ansatzflächen (17) verschweißt, wobei das Verschweißen ohne Beigabe eines Zusatzwerkstoffes und unter Verwendung einer Schweißbadsicherung auf der Rohraußenseite erfolgt. Um ein solches Verfahren so weiterzuentwickeln, daß sich bei unverändert guter Zugänglichkeit zu den Schweißstellen die Zahl der Wärmetauscherrohre vergrößern läßt, wird als die beteiligten Medien trennende Wand (12) ein Abschnitt eines zylindrischen Sammlers verwendet, wobei zunächst die nach außen hin gebogene Mantelfläche (11) des Abschnittes mit den Ansatzflächen (17) versehen wird.

## Beschreibung

Die Erfindung betrifft ein Verfahren zum restspaltfreien Verschweißen der Enden dünnwandiger Wärmetauscherrohre mit der die am Wärmeaustausch beteiligten Medien trennenden Wand, die mit dem Innendurchmesser der Rohre entsprechenden Bohrungen und diese Bohrungen umgebenden Ansatzflächen für an den Rohrenden ausgebildete Stirnflächen versehen wird, bevor mittels eines im Inneren der Bohrung umlaufenden Schweißkopfes die Stirnflächen der Rohre mit den Ansatzflächen verschweißt werden, wobei das Verschweißen ohne Beigabe eines Zusatzwerkstoffes und unter Verwendung einer Schweißbadsicherung auf der Rohraußenseite erfolgt.

Ein derartiges Verfahren ist z.B. aus der DE 38 22 807 C1 bekannt. Die Befestigung der Rohrenden erfolgt auf der Rückseite einer Rohrplatte, die mit Bohrungen versehen ist, die dem Innendurchmesser der Rohre entsprechen. Konzentrisch um diese Bohrungen sind aus dem rückseitigen Material der Rohrplatten herausgearbeitete Krägen angeordnet, auf deren Stirnflächen die korrespondierenden Stirnflächen der zentrierten Rohre aufgesetzt werden. Anschließend wird durch einen in das Innere der Bohrung einführbaren und dort umlaufenden Schweißkopf die Verbindung der Teile vorgenommen. Da die Rohrenden mit der Rückseite der Rohrplatte verbunden werden, ergeben sich keine Restspalte, die oft Ursache nicht kontrollierbarer Korrosion sind.

Die Anzahl der gemäß dem bekannten Verfahren an einer Rohrplatte zu befestigenden Rohre ist durch den aus schweißtechnischen Gründen einzuhaltenden Teilungsabstand zwischen den einzelnen Rohren begrenzt. Die nach dem Verfahren gemäß DE 38 22 807 C1 bearbeiteten Rohrplatten erfordern daher, um eine ausreichende Zahl an Rohrenden unterbringen zu können, eine relativ groß dimensionierte Rohrplatte, was wiederum zu einem entsprechend großen Gesamtdurchmesser des Wärmetauschers führt.

Der Erfindung liegt die **Aufgabe** zugrunde, das bekannte Verfahren zum restspaltfreien Verschweißen der Enden dünnwandiger Wärmetauscherrohre so weiterzuentwickeln, daß sich bei unverändert guter Zugänglichkeit zu den Schweißstellen entweder die Anzahl der Wärmetauscherrohre bei unverändertem Außendurchmesser des Wärmetauschers vergrößern läßt, oder bei gleichbleibender Zahl der Wärmetauscherrohre sich der Gesamtdurchmesser des Wärmetauschers verringern läßt.

Zur **Lösung** dieser Aufgabe wird bei einem Verfahren der eingangs genannten Art vorgeschlagen, daß als die beteiligten Medien trennende Wand ein Abschnitt eines zylindrischen Sammlers verwendet wird, wobei die nach außen hin gebogene Mantelfläche des Abschnittes mit den Ansatzflächen versehen wird.

Durch das Anschweißen der Rohrenden an einer gebogenen Mantelfläche, die Teil eines zylindrischen Sammlers ist, läßt sich der Teilungsabstand, d.h. der Abstand zwischen benachbarten Rohrenden, im Vergleich zu dem bekannten Verfahren verringern. Dies kann entweder dazu genutzt werden, bei gleicher Anzahl an Wärmetauscherrohren den zu deren Aufnahme erforderlichen Durchmesser des Wärmetauschers im Bereich des Sammlers zu verringern, oder alternativ bei gleichem Durchmesser des Wärmetauschers die Anzahl der Wärmetauscherrohre zu vergrößern, und so die Wärmeübertragungsleistung zu steigern.

Mit der Erfindung wird die bei der bekannten Sammlerkonstruktion erforderliche Rohrteilung bei unverändert guter Zugänglichkeit reduziert, wodurch kompaktere Abmessungen und gleichzeitig bessere Wärmeübergangszahlen erreicht werden können.

Gemäß einer bevorzugten Ausgestaltung wird der Sammler aus zwei Halbschalen zusammengesetzt. Die eine Halbschale ist hierbei mit den zu den Wärmetauscherrohren führenden Bohrungen versehen, während die andere Halbschale erst nach Abschluß sämtlicher Schweißarbeiten mit der ersten Halbschale zu dem dann geschlossen geformten Sammler zusammengesetzt wird.

Um den Schweißkopf zentrisch in die vorbereitete Bohrung einführen zu können, sollte gemäß einer Weiterbildung des Verfahrens der Innendurchmesser des Sammlers mindestens 400 mm betragen.

Bei einer bevorzugten Ausgestaltung des Verfahrens wird die Verschweißung der Rohrenden mit der die beteiligten Medien trennenden Wand unter Verwendung eines Inertgas-Schutzschweißverfahrens durchgeführt, insbesondere eines Wolfram-Inertgas-Schweißverfahrens (WIG).

Ferner wird vorgeschlagen, daß die Ansatzflächen und Stirnflächen stumpf gearbeitet sind. Das Schweißverfahren wird also mit einem glatten, rechtwinklig zur Rohrlängsachse verlaufenden sowie ebenen Schweißstoß durchgeführt, der einfach hergestellt und sehr gut mit einfachen Mitteln gesäubert werden kann. Die bei dieser Vorgehensweise erforderliche Zentrierung des Rohres bezüglich der Bohrung kann über einen außen aufgesetzten Keramikring erfolgen. Ein solcher Keramikring stellt auch eine zuverlässige Schweißbadsicherung dar, die ein Austreten der Schmelze an der Außenfläche des Verbindungsstoßes verhindert.

Ein wesentlicher Aspekt der Erfindung ist es, eine erhöhte Zahl von Wärmetauscherrohren auf der die am Wärmeaustausch beteiligten Medien trennenden Wand unterzubringen, indem der Abstand der einzelnen Rohrenden zueinander im Vergleich zu den bekannten Verfahren reduziert wird. Hierzu wird mit einer Ausgestaltung des Verfahrens vorgeschlagen, daß das Verhältnis von Rohrmittelpunktsabstand zu Rohrdurchmesser höchstens 1,5 beträgt.

Das erfindungsgemäße Verfahren wird nachfolgend anhand der Zeichnung erläutert. Darin zeigen:
- Fig. 1: in einer geschnittenen Übersichtsdarstellung einen Wärmetauscher mit an beiden Enden angeordneten Sammlern, zwischen denen sich eine Vielzahl an Wärmetauscherrohren erstreckt;
- Fig. 2: in einer Teildarstellung aus Fig. 1 einen Sammler mit davon ausgehenden Wärmetauscherrohren, wobei die Wärmetauscherrohre jeweils durch ihre Mittellinie angedeutet sind;
- Fig. 3: den in Fig. 2 dargestellten Sammler mit den davon ausgehenden Wärmetauscherrohren in einer im Vergleich zu Fig. 2 um 90° gedrehten Ansicht;
- Fig. 4: in einer in Fig. 2 mit IV bezeichneten Ausschnittsdarstellung Einzelheiten einer Schweißverbindung zwischen der Wand des Sammlers und den davon ausgehenden Wärmetauscherrohren und
- Fig. 5: eine geschnittene Ansicht der in Fig. 4 dargestellten Wärmetauscherrohre entlang der Linie V-V.

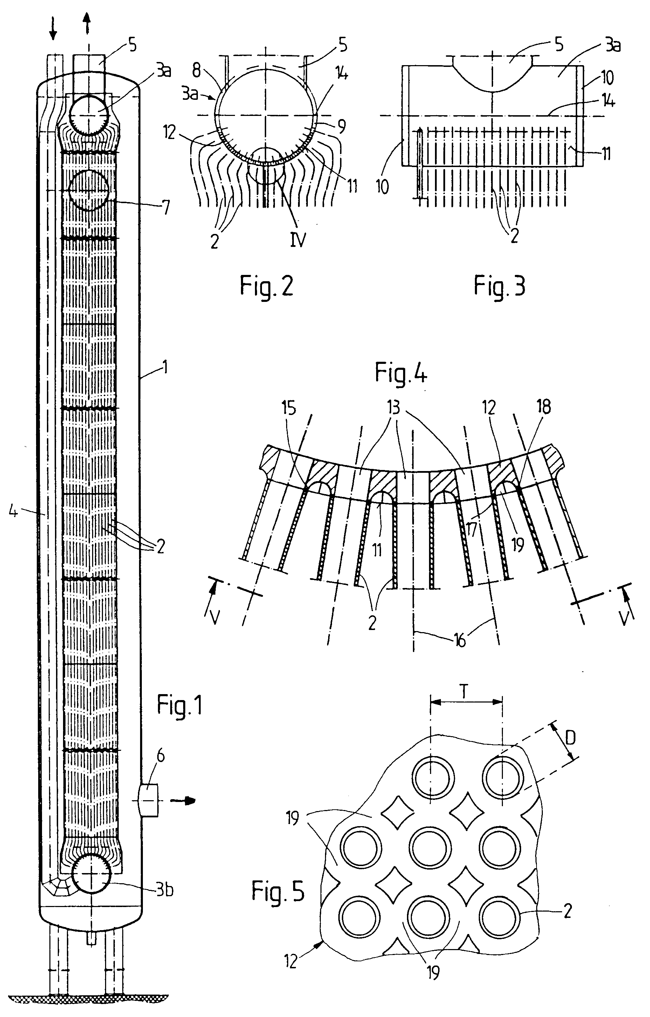

Der in Fig. 1 schematisch dargestellte Wärmetauscher besteht aus einem geschweißten Außenmantel 1, einem koaxial darin angeordneten Bündel von Wärmetauscherrohren 2 sowie zwei den Wärmetauscher nach oben und unten abschließenden Sammlern 3a,3b, in die die dünnwandig ausgebildeten Rohre 2 münden. Das eine Medium, z.B. Wasser, gelangt über einen Kanal 4 in den in Fig. 1 unten angeordneten Sammler 3b, durchströmt von dort die Rohre 2 bis zu dem oberen Sammler 3a, und verläßt diesen über den Austritt 5. Das andere Medium, z.B. Heißluft, gelangt über den Eintrittsstutzen 7 in das Innere des im wesentlichen zylindrisch ausgebildeten Außenmantels 1, durchströmt diesen im Gegenstrom zu dem anderen Medium in den Rohrbündel, und verläßt den Innenraum über den Austrittsstutzen 6. Mehrere Umlenkbleche 8 bringen das über den Zuführstutzen 6 in den Wärmetauscher gelangende Medium zu einem öfteren Richtungswechsel, so daß der Wärmeaustausch im wesentlichen nach Art eines Kreuz-Gegenstromes erfolgt.

In den Figuren 2 und 3 sind Einzelheiten des oberen Sammlers 3a einschließlich der daran angeschlossenen Rohre 2 dargestellt. Von den Rohren 2 ist aus Gründen der Übersicht jeweils nur die Mittellinie eingezeichnet. Der Sammler 3a weist, ebenso wie der entsprechend aufgebaute Sammler 3b, einen zylindrischen Grundkörper aus zwei Halbschalen 8,9 sowie zwei die Stirnseiten verschließenden, kreisförmigen Platten 10 auf. Die obere Halbschale 8 ist mit dem Einlaufstutzen 5 verbunden, während die mit der oberen Halbschale 8 verschweißte untere Halbschale 9 mit sämtlichen Rohren 2 des Rohrbündels verschweißt ist. Der innerhalb des Wärmetauschers angeordnete Sammler 3a bildet also eine Kammer, in deren Innenraum sich das eine am Wärmeaustausch beteiligte Medium, und außerhalb deren sich das andere am Wärmeaustausch beteiligte Medium befindet. Ein Abschnitt dieser Kammer ist die untere Halbschale 9, die auf diese Weise eine Wand bildet, welche die am Wärmeaustausch beteiligten Medien trennt.

Die nach außen hin gebogene Mantelfläche 11 der den unteren Abschnitt des Sammlers 3a bildenden Halbschale 9 ermöglicht es, mehr Ansatzpunkte für Rohre 2 unterzubringen als dies bei einem eben geformten Rohrboden der Fall ist. Dabei ist es nicht erforderlich, daß der zylindrische Sammler 3a als Kreiszylinder ausgebildet ist. Ein Zylinder mit elliptischer Querschnittsfläche läßt sich mit gleichem Vorteil verwenden.

In Fig. 4 ist dargestellt, daß die Wand 12 des Sammlers 3a im Bereich der unteren Halbschale 9 mit einer Vielzahl gleicher Bohrungen 13 versehen ist. Jede Bohrung 13 ist an der Außenseite der durch die Halbschale 9 gebildeten Wand 12 konzentrisch von einem Kragen 15 umgeben, der aus dem Material auf der Mantelfläche 11 der Wand 12 herausgearbeitet worden ist, und eine rechtwinklig zur Achse 16 der Bohrung verlaufende Ansatzfläche 17 bildet. Mit dieser Ansatzfläche 17 wird die am Ende jedes dünnwandigen Rohres 2 ausgebildete Stirnfläche 18 ohne Verwendung eines Zusatzwerkstoffes restspaltfrei verschweißt.

Vor dem Verschweißen kann auf das Ende des Rohres 2 ein Keramikring aufgeschoben werden, der das Rohr 2 sowie den Kragen 15 möglichst enganliegend umgibt. Ein solcher Keramikring wird über den durch die Ansatzfläche 17 und die Stirnfläche 18 gebildeten Schweißstoß geschoben, sobald das Ende des Rohres 2 an den Kragen 15 angesetzt worden ist. Der Keramikring bewirkt dann zum einen eine Zentrierung des Rohres 2 bezüglich des Kragens 15 der Wand 12. Außerdem dient ein solcher Keramikring als Badsicherung während des Schweißvorganges. Dieser Schweißvorgang erfolgt ohne Zusatzwerkstoff mittels eines im Inneren der Bohrung 13 umlaufenden Schweißkopfes, z.B. nach dem Wolfram-Inertgas-Schweißverfahren (WIG). Der Schweißkopf wird hierzu durch den Innenraum der Halbschale 9 bis in die Bohrung 13 geführt, dann die Schweißelektrode an die Verbindungsstelle von Ansatzfläche 17 und Stirnfläche 18 gesetzt, und der Schweißkopf dann um seine eigene Achse gedreht. Durch Verwendung eines Keramikringes wird verhindert, daß das Schweißbad nach außen in die Zwischenräume zwischen den einzelnen Rohren austritt. Nach Erkaltung der Schweißnaht wird der Keramikring zerstört.

Die Figuren 4 und 5 lassen erkennen, daß das Herausarbeiten der Krägen 15 durch Einarbeitung einer koaxial um die Bohrung 13 laufenden Nut 19 in die Außenseite der Wand 12 erfolgt. Aus der Draufsicht Fig. 5 ist ferner zu erkennen, daß die ringförmigen Nuten 19 der einzelnen Bohrungen 13 in jenen Bereichen, in denen sich die Rohre 2 am nächsten kommen, teilweise ineinander laufen bzw. sich überdecken. Auf diese Weise wird ein möglichst geringer Abstand zwischen den einzelnen Rohren 2 möglich. Das Verhältnis des in Fig. 5 eingezeichneten Rohrmittelpunktsabstandes (der Teilung) T zu dem Rohrdurchmesser D beträgt höchstens 1,5.

Die auf der Zeichnung dargestellten Sammler 3a,3b weisen anfangs getrennte Halbschalen 8,9 auf. Erst nachdem sämtliche Rohre 2 in der geschilderten Weise an der nach außen weisenden Mantelfläche 11 der Halbschale 9 befestigt sind, wird die andere Halbschale 8 angesetzt, und mittels der Schweißnaht 14 sowie durch Ansetzen der kreisförmigen Platten 10 der Sammler geschlossen. Um eine gute Zugänglichkeit des Schweißkopfes zu den einzelnen Bohrungen 13 sicherzustellen, beträgt der Innendurchmesser des Sammlers 3a,3b mindestens 400 mm.

### Bezugszeichenliste

- 1: Außenmantel
- 2: Rohr
- 3a: Sammler
- 3b: Sammler
- 4: Kanal
- 5: Austritt
- 6: Austrittsstutzen
- 7: Eintrittsstutzen
- 8: Halbschale
- 9: Halbschale
- 10: kreisförmige Platte
- 11: Mantelfläche
- 12: Wand
- 13: Bohrung
- 14: Schweißnaht
- 15: Kragen
- 16: Achse der Bohrung
- 17: Ansatzfläche
- 18: Stirnfläche
- 19: Nut

## Patentansprüche

1. Verfahren zum restspaltfreien Verschweißen der Enden dünnwandiger Wärmetauscherrohre mit der die am Wärmeaustausch beteiligten Medien trennenden Wand (12), die mit dem Innendurchmesser der Rohre (2) entsprechenden Bohrungen (13) und diese Bohrungen (13) umgebenden Ansatzflächen (17) für an den Rohrenden ausgebildete Stirnflächen (18) versehen wird, bevor mittels eines im Inneren der Bohrung (13) umlaufenden Schweißkopfes die Stirnflächen (18) der Rohre (2) mit den Ansatzflächen (17) verschweißt werden, wobei das Verschweißen ohne Beigabe eines Zusatzwerkstoffes und unter Verwendung einer Schweißbadsicherung auf der Rohraußenseite erfolgt,
**dadurch gekennzeichnet,**
daß als die beteiligten Medien trennende Wand (12) ein Abschnitt eines zylindrischen Sammlers (3a,3b) verwendet wird, wobei die nach außen hin gebogene Mantelfläche (11) des Abschnittes mit den Ansatzflächen (17) versehen wird.

2. Verfahren nach Anspruch 1, dadurch gekennzeichnet, daß der Sammler (3a,3b) aus zwei Halbschalen (8,9) zusammensetzbar ist.

3. Verfahren nach Anspruch 1 oder Anspruch 2, dadurch gekennzeichnet, daß der Innendurchmesser des Sammlers (3a,3b) mindestens 400 mm beträgt.

4. Verfahren nach einem der vorangehenden Ansprüche, gekennzeichnet durch Verwendung eines Inertgas-Schutzschweißverfahrens, insbesondere eines Wolfram-Inertgas-Schweißverfahrens (WIG).

5. Verfahren nach einem der vorangehenden Ansprüche, dadurch gekennzeichnet, daß Ansatzflächen (17) und Stirnflächen (18) stumpf gearbeitet sind.

6. Verfahren nach einem der vorangehenden Ansprüche, dadurch gekennzeichnet, daß das Verhältnis von Rohrmittelpunktsabstand (Teilung T) zu Rohrdurchmesser (D) höchstens 1,5 beträgt.
